# EUROPÄISCHE PATENTANMELDUNG

(11) **EP 2 025 436 A2**
(43) Veröffentlichungstag der Anmeldung: **18.02.2009**
(21) Anmeldenummer: 08020126.2
(22) Anmeldetag: 09.02.2006
(51) Int. Cl.: B23B 27/16, B23C 5/22, B23B 29/24, B23P 17/06, A47L 13/08, B02C 18/18, B44D 3/16, B23D 79/08

(54) **Schneidplatte**

(30) Priorität: 19.02.2005 DE 102005007676
(62) Teilanmeldung aus: 06002597.0
(71) Anmelder: MWS Schneidwerkzeuge GmbH & Co KG, 98574 Schmalkalden / Thüringen (DE)
(72) Erfinder: Tröger, Hartmut, 98574 Schmalkalden / OT Asbach (DE); Reinhardt, Hermann, 98593 Floh - Seligenthal/OT Hohleborn (DE)

(57) **Zusammenfassung**

Bei einer Schneidplatte (1) aus legiertem Stahl, aus Hartmetall oder aus hochlegiertem pulvermetallurgisch hergestellten Stahl, o.ä. mit einer oder mehreren Schneide/n (6), die entweder direkt an der Schneidplatte (1) oder an im Bereich Schneide/n (6) an der Schneidplatte (1) befestigten Hartstoffleiste/n (22) angeordnet sind, sind im Bereich der Schneide/n (6), d.h. entweder auf der Oberfläche (3) der Schneidplatten (1) selbst oder an der Schneide (6) der Hartstoffleiste/n (22) Rillenprofile (17) angeordnet.
Eine solche Schneidplatte besitzt eine sehr hohe Schneidhaltigkeit (Standzeit) und kann nicht nur bei Schneidwerkzeugen im Bereich der Metallverarbeitung sondern auch bei Schneidwerkzeugen in Entsorgungs- und Recyclinganlagen, bei Schneidwerkzeugen der Gewinnungs- und Aufbereitungsindustrie, bei Schneidwerkzeugen der Papier- und Holzindustrie, bei Schneidwerkzeugen der Medizintechnik aber auch bei Schneidwerkzeugen in der Bau- und der Lebensmittelindustrie eingesetzt werden.

## Beschreibung

Die Erfindung betrifft Schneidplatten für Schneidwerkzeuge.

Aus dem Stand der Technik sind Schneidplatten/Wendeschneidplatten aus legiertem Stahl, aus Hartmetall oder aus hochlegiertem pulvermetallurgisch hergestellten Stahl, o.ä. für Schneidwerkzeuge mit einer oder mehreren Schneide/n und zumeist einer (oder auch mehreren) Befestigungsbohrungen bekannt welche sowohl in feststehenden Werkzeugen wie auch in rotierenden Werkzeugen bei der Metallbearbeitung eingesetzt werden.

Weiterhin sind u.a. im DE GM 71 02 492 aber auch im DE GM 73 46 110 als Klingen ausgebildete und speziell gelagerte Messerplatten zur Herstellung von Stahlwolle vorbeschrieben.

Diese in speziellen Haltern verstellbar eingespannten Klingen sind an der Klingenschneide mit unterschiedlichen Riffelteilungen ausgestattet um langfasrige und entsprechend der jeweiligen Riffelteilung unterschiedliche "Stahlwolle-Drahtfaser-Dicken" von Stahldrähten "abzuschaben".

Zur Herstellung dieser Stahlwollefasern werden Stahldrähte auf Sondermaschinen über mehrere hintereinander angeordnete derartige Klingen mit jeweils unterschiedlichen Riffelteilungen gezogen.

Dabei werden von den Stahldrähten entsprechend der jeweiligen Riffelteilung der zum Einsatz kommenden Klinge die jeweils gewünschte Faktion ("Stahlwolle-Drahtfaser-Dicke") abgetrennt.

Entgegen den Klingen zur Erzielung der gewünschten Langfasrigkeit bei der Stahlwolle dienen die in den Schneidwerkzeugen bei der Metallbearbeitung eingesetzten Schneidplatten gezielt der Erzeugung möglichst kurzer Späne und sind stets mit ebenen Schneidenoberflächen ausgestattet.

Im Stand der Technik ist es üblich in den Schneidplatten Senkbohrungen anzuordnen welche sich zur Oberfläche der Schneidplatten hin etwa kegelförmig mit einem konvexen (balligen) Kegelmantel erweitern und welche der Befestigung der Schneidplatten am Werkzeuggrundkörper dienen..

Der Erfindung liegt die Aufgabe zugrunde eine neuartige Schneidplatte für Schneidwerkzeuge zu entwickeln welche in Folge der erfindungsgemäßen Lösung eine sehr hohe Schneidhaltigkeit (Standzeit) besitzt, wodurch sich die Lebensdauer dieser Schneidplatten deutlich erhöht und dadurch der Wartungs-und Instandhaltungsaufwand der Fertigungsanlagen in denen die erfindungsgemäßen Schneidplatten Einsatz finden deutlich sinkt, so dass die Verfügbarkeit und damit die Produktionskapazität der mit den neuartigen Schneidplatten ausgestatteten Produktionsanlagen deutlich gesteigert werden kann, und welche zudem infolge der deutlich verbesserten Schneidhaltigkeit/Standzeit nicht nur bei Schneidwerkzeugen im Bereich der Metallverarbeitung sondern auch bei Schneidwerkzeugen in Entsorgungs- und Recyclinganlagen, bei Schneidwerkzeugen der Gewinnungs- und Aufbereitungsindustrie, bei Schneidwerkzeugen der Papier- und Holzindustrie, bei Schneidwerkzeugen der Medizintechnik aber auch bei Schneidwerkzeugen in der Bau- und der Lebensmittelindustrie eingesetzt werden kann.

Erfindungsgemäß wird diese Aufgabe mittels einer Schneidplatte (1) aus legiertem Stahl, aus Hartmetall, oder aus hochlegiertem pulvermetallurgisch hergestellten Stahl, o.ä. mit einer oder mehreren Schneide/n (6), wobei diese Schneiden (6) entweder direkt an der Schneidplatte (1) angeformt oder an im Bereich der Schneide/n (6) an der Schneidplatte (1) befestigten Hartstoffleiste/n (22) angeordnet sind, dadurch gelöst, dass im Bereich der Schneide/n (6), d.h. entweder auf der Oberfläche (3) der Schneidplatten (1) selbst oder an der Schneide (6) der Hartstoffleiste/n (22), Rillenprofile (17) angeordnet sind.

Durch diese erfindungsgemäßen Rillenprofile (17) wird überraschenderweise eine sehr hohe Schneidhaltigkeit bewirkt welche die Lebensdauer der erfindungsgemäßen Schneidplatten deutlich erhöht und dadurch den Wartungs- und Instandhaltungsaufwand der Fertigungsanlagen in denen die erfindungsgemäßen Schneidplatten Einsatz finden merklich senkt, so dass die Verfügbarkeit und damit die Produktionskapazität der Produktionsanlagen allein durch den Einsatz der neuartigen, erfindungsgemäßen Schneidplatten deutlich erhöht werden kann.

Infolge der deutlich verbesserten Schneidhaltigkeit/Standzeit können die erfindungsgemäßen Schneidplatten daher nicht nur bei Schneidwerkzeugen im Bereich der Metallverarbeitung sondern auch bei Schneidwerkzeugen in Entsorgungs- und Recyclinganlagen, bei Schneidwerkzeugen der Gewinnungs-und Aufbereitungsindustrie, bei Schneidwerkzeugen der Papier- und Holzindustrie, bei Schneidwerkzeugen der Medizintechnik aber auch bei Schneidwerkzeugen in der Bau- und der Lebensmittelindustrie eingesetzt werden kann.

Weiterhin ist für Schneidplatten (1) aus Hartmetall oder aus hochlegiertem pulvermetallurgisch hergestellten Stahl, o.ä. charakteristisch, dass der Außenradius (R1) des auf der Oberfläche (3) der Schneidplatte (1) bzw. des im Bereich der Schneiden (6) an der/den Hartstoffleiste/n (22) angeordneten/eingearbeiteten Rillenprofils (17) größer als der Innenradius (R2) ist.

Infolge dieser spezielle erfindungsgemäße Ausführung der Rillenprofile bei denen der Außenradius (R1) an der Spitze des Rillenprofils größer als Innenradius (R2) ist, wird es beim Pressen dieser erfindungsgemäßen, mit Rillenprofil versehenen Schneidplatte (1) möglich größere Korngrößen zu verwenden.

Diese größeren Korngrößen sind einerseits rieselfähiger und lassen sich dadurch beim automatischen Verpressen besser zuführen.

Andererseits ist durch das erfindungsgemäße Rillenprofil gewährleistet, dass der kleinere Innenradius (R2) an der Spitze des Presswerkzeuges leichter in die Pulvermasse eindringt und dabei eine gleichmäßigere Verteilung der Pulvermasse im Nutgrund bewirkt.

Die erfindungsgemäße Lösung bewirkt, dass die Schneidplatten (1) aus Hartmetall kostengünstig automatisch hergestellt werden können, wobei selbstverständlich unterschiedliche, für den jeweiligen Einsatzfall optimale Hartmetallsorten Einsatz finden.

Vorteilhaft ist auch, wenn die Schneidplatten (1) als Wendeschneidplatten mit zwei gegenüberliegenden Schneiden (6) ausgeführt sind.

Diese als Wendeschneidplatten ausgeführten Schneidplatten (1) ermöglichen, dass selbst die an einer der beiden Schneiden (6) verschlissenen Schneidplatten (1) nochmals entlang der jeweiligen Werkzeugschneide (5) mit der nicht verschlissenen Schneide (6) neu ausgerichtet und eingesetzt werden können.

Dabei ermöglicht die erfindungsgemäße Ausführung als Wendeschneidplatten nicht nur eine Verdopplung der Standzeit der einzelnen Schneidplatten (1) sondern bewirkt auch, dass selbst unterschiedliche Rillenprofile, wie beispielsweise verschiedene Größen von Rillenprofilen und/oder unterschiedliche Rillenneigungen (ψ) gegenüber der Schneide, für die unterschiedlichsten Einsatzfälle an den beiden gegenüberliegenden Schneiden (6) einer Schneidplatte (1) angeordnet werden können.

Erfindungsgemäß ist auch, dass das Rillenprofil (17) zur Schneide (6) unter einem Rillenneigungswinkel ψ von 0° bis 180° angeordnet ist.

Beispielsweise wird mittels einem senkrecht zur Schneide (6) angeordneten Rillenprofil (d.h. mit einem Rillenneigungswinkel (ψ) von 90°) selbst bei langspanenden Werkstoffen wie z.B. bei Cu, Mg, Al und deren Legierungen ein gesicherter Spanbruch erreicht.

Erfindungsgemäß ist auch, dass das Rillenprofil (17) kreuzweise zur Schneide (6), beispielsweise unter einem Rillenneigungswinkel (ψ) von 45° angeordnet ist.

Ein derartiges Rillenprofil (17) ist beispielsweise zur Zerkleinerung von unterschiedlichen Hölzern, aber auch zur Zerkleinerung von langfasrigen Hölzern und zudem auch zur Zerkleinerung von Spanplatten oder ähnlichen Werkstoffen sehr gut geeignet, da mittels einer derartigen Profilierung bei diesen Werkstoffen kleine Späne erzeugt werden wodurch einer "Verstopfung" der Anlage entgegengewirkt werden kann.

Die erfindungsgemäßen Schneidplatten (1) ermöglichen infolge ihrer speziellen Variabilität, dass längs einer Werkzeugschneide (5) nebeneinander Schneidplatten (1) mit verschiedenen Schneiden (6), z.B. verschiedenen Größen eines Rillenprofils (17) angeordnet werden können.

Kennzeichnend ist aber auch, dass die Beabstandung der Rillen des Rillenprofils, die Teilung (T) über die Breite der Werkzeugschneide (5), aber auch innerhalb einer Schneidenplatte (1) ungleichmäßig sein kann.

Ein weiteres Merkmal der Erfindung besteht darin, dass bei den erfindungsgemäßen Schneidplatten (1) mit nur einer Schneide (6), aber auch bei den als Wendeschneidplatten ausgebildeten erfindungsgemäßen Schneidplatten (1) an den jeweiligen Schneide/n (6) eine Hartstoffschicht angeordnet ist. Mittels dieser Hartstoffbeschichtung wird nochmals eine zusätzliche Standzeiterhöhungen des Rillenprofils, insbesondere bei hohen Schnittgeschwindigkeiten erzielt.

Erfindungswesentlich ist auch, dass der Werkzeuggrundkörper (2) mindestens an der Auflagefläche (9) der Schneidplatte (1) eine wärmeleitende Beschichtung (18) trägt. Vorzugsweise besteht diese Beschichtung (18) aus Kupfer.

Diese wärmeleitende Schicht, wie z.B. eine Kupferschicht dient einer optimalen Wärmeableitung von den Schneidenplatten (1) in den Werkzeuggrundkörper (2). Infolge einer solch optimierten Wärmeableitung wird die Klebeneigung an der Schneide (6) insbesondere bei der Bearbeitung von rostfreien Werkstoffen wesentlich reduziert.

Erfindungsgemäß ist auch, dass auf der Schneidplatte (1) eine, oder gegenüberliegend zwei erfindungsgemäße Hartstoffleisten (22) eingelötet oder eingeklebt ist/ sind, welche jeweils mit den mit Rillenprofil (21) ausgestatteten Schneide/n (6) versehene sind.

Durch die Anordnung derartiger erfindungsgemäßer Hartstoffleisten (22) können bei verschiedenen Einsatzfällen die bereits erläuterten vorteilhaften Wirkungen der erfindungsgemäßen Lösung auch für speziellen Einsatzfälle genutzt und dadurch die Schneidhaltigkeit (Standzeit) auch bei diesen Schneidplattenbauformen deutlich erhöht werden.

Weitere Einzelheiten und Merkmale der Erfindung ergeben sich aus den Unteransprüchen sowie der nachfolgenden Beschreibung der erfindungsgemäßen Ausführungsbeispiele in Verbindung mit den Zeichnungen zur erfindungsgemäßen Lösung.

Nachfolgend wird die Erfindung an Hand mehrerer Ausführungsbeispiele in Verbindung mit zwanzig Darstellungen näher erläutert werden. Die möglichen Realisierungsformen der Erfindung sind selbstverständlich nicht auf die nachfolgend vorgestellten Ausführungsbeispiele begrenzt.

Es zeigen dabei:
- Figur 1:: eine mögliche Bauform der erfindungsgemäßen Schneidplatte aus Hartmetall mit dem an den gegenüberliegenden Schneiden angeordnetem Rillenprofil 17;
- Figur 2:: einen Teilschnitt durch das Rillenprofil 17 gemäß Figur 1;
- Figur 3:: eine erfindungsgemäß aufgebaute Werkzeugschneide 5 eines Handschabers;
- Figur 4 :: die Draufsicht auf einen mit Schneidplatten 1 bestückten Werkzeuggrundkörper 2, der mit Wendeplatten bestückte Schneidleiste einer Recyclinganlage;
- Figur 5 :: Draufsicht auf die Werkzeugschneide 5 einer Schneidleiste für Biomassen mit auf den Schneidplatten 1 angeordneten einseitig eingelöteten erfindungsgemäßen Hartstoffleisten 22;
- Figur 6 :: Teilschnitt bei A-A, gemäß Figur 17, durch die Schneidleiste für Biomassen mit einseitig eingelöteter Hartstoffleiste 22;
- Figur 7 :: Teilschnitt durch eine Schneidplatte 1 mit beidseitig eingeklebten Hartstoffleisten 22;
- Figur 8 :: Draufsicht auf den Ausschnitt einer Werkzeugschneide 5 aus Schneidplatten 1 mit beidseitig angeordneten Hartstoffleisten 22 und senkrecht zur Schneide 6 angeordnetem erfindungsgemäßen Rillenprofil 17;
- Figur 9 :: ist eine mögliche weitere Ausführungsform der auf Schneidplatten 1 anzuordnenden Hartstoffleisten 22 mit parallel zur Schneide 6 angeordnetem erfindungsgemäßen Rillenprofil 17;
- Figur 10 :: eine mögliche weitere Ausführungsform der auf Schneidplatten 1 anzuordnenden Hartstoffleisten 22 mit schräg zur Schneide 6 angeordnetem erfindungsgemäßen Rillenprofil 17;
- Figur 11 :: eine mögliche weitere Ausführungsform der auf Schneidplatten 1 anzuordnenden Hartstoffleisten 22 mit kreuzweise zur Schneide 6 angeordnetem erfindungsgemäßen Rillenprofil 17;
- Figur 12 :: die Vorderansicht eines "Schneidzahnes" mit von Schneidplatten 1 gebildeten Zahnflanken 20 und einer zwischen den Zahnflanken 20 liegenden mit Wolframkarbid-Pulver gepanzerten Zahnfläche 25;
- Figur 13 :: die Draufsicht auf eine mögliche Ausführungsform des Schneidzahnes aus Figur 8 mit gerader Zahnflanke 20;
- Figur 14 :: die Draufsicht auf die andere Zahnflanke des Schneidzahnes aus Figur 8 in einer weiteren möglichen Ausführungsform, und zwar mit entlang jeder Zahnflanke 20 in der Tiefe versetzt angeordneten Schneidplatten 1;
- Figur 15 :: die Seitenansicht eines vierarmigen, mit Schneidplattenreihen besetzten, beidseitig schneidenden Schermessers für Biomassen;
- Figur 16 :: die Draufsicht auf eine Schneidplattenreihe des beidseitig schneidenden Schermessers für Biomassen aus Figur 15;
- Figur 17 :: die Draufsicht auf die Schneidplattenreihen eines ähnlich Figur 15 gestalteten Schermessers für Biomassen mit jedoch seitlich abwechselnd angeordneten Werkzeugschneiden 5;
- Figur 18 :: die Seitenansicht eines zweiarmigen, mit Schneidplattenreihen besetzten, einseitig schneidenden Schermessers für Biomassen;
- Figur 19 :: Schnitt bei A-A gemäß Figur 18;
- Figur 20 :: die Draufsicht auf die Schneidplattenreihen des zweiarmigen, einseitig schneidenden Schermessers für Biomassen gemäß Figur 18.

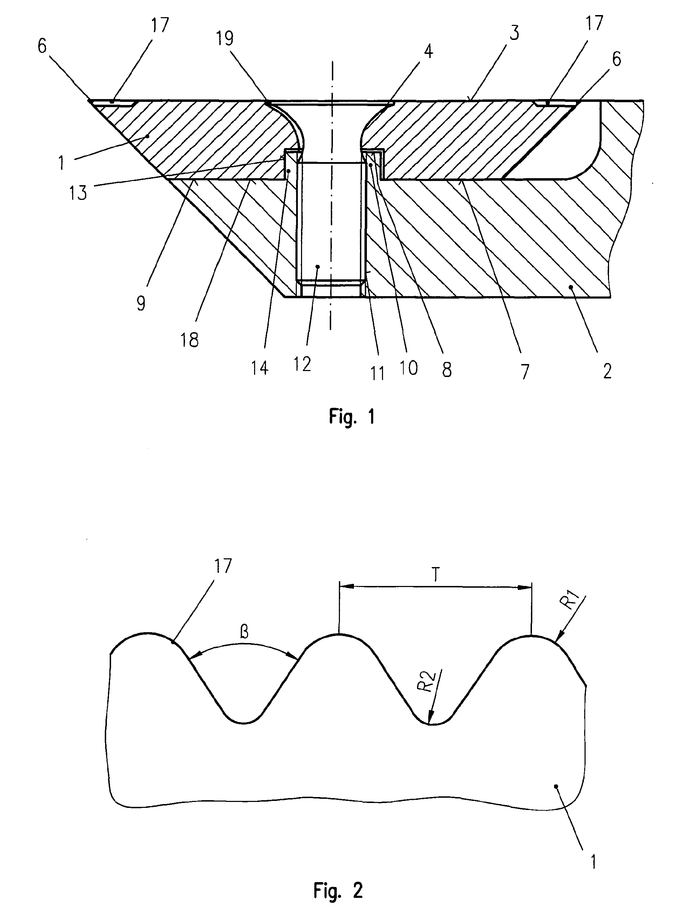

Wie in der Figur 1 dargestellt, sind im Bereich der Schneiden 6 auf der Oberfläche 3 dieser erfindungsgemäßen Schneidplatten 1 Rillenprofile 17 eingearbeitet.

Diese Rillenprofile 17 verlaufen senkrecht zur Schneide 6 und bewirken eine sehr hohe Schneidhaltigkeit (Standzeit) der Werkzeugschneide.

Die Schneidplatten 1 mit dem erfindungsgemäßen Rillenprofil 17 können, wie in der Figur 1 ebenfalls dargestellt, auch als Wendeplatten mit jeweils zwei mit einem Rillenprofile 17 versehenen Schneiden 6 ausgeführt sein.

Diese Ausführung als Wendeplatte ermöglicht neben eine Verdopplung der Standzeit der Schneidplatten 1 auch gleichzeitig, dass verschiedene Größen von Rillenprofilen 17 an einer Schneidplatte 1 angeordnet sein können.

Wie ebenfalls aus der Figur 1 ersichtlich, ist an der Auflagefläche 9 der Schneidplatte 1 eine wärmeleitende Beschichtung 18 aus Kupfer angeordnet.

Diese wärmeleitende Kupferschicht dient einer optimalen Ableitung der im Zerspanungsprozess entstehenden Wärme von den Schneidenplatten 1 in den Werkzeuggrundkörper 2.

Dadurch wird die Klebeneigung an der Schneide 6 insbesondere bei der Bearbeitung von rostfreien Werkstoffen wesentlich reduziert und die Standzeit infolge des "nicht Anklebens" von Stahlpartikeln deutlich erhöht.

Die Figur 2 zeigt nun einen Teilschnitt durch das Rillenprofil 17 einer Schneidplatte 1 aus Hartmetall. Derartige Schneidplatten aus Hartmetall lassen sich automatisch herstellen, d.h. sowohl automatisch pressen wie auch automatisch schleifen.

Der äußere Radius R1 des auf der Oberfläche der Schneidplatte 1 eingearbeiteten Rillenprofils 17 ist dabei größer ist als der innere Radius R2.

Infolge dessen wird beim Pressen dieser mit einem Rillenprofil versehenen Schneidplatten1 gewährleistet, dass auch größere Korngrößen beim Pressen verwendet werden können. Diese sind rieselfähiger und lassen sich beim automatischen Verpressen besser zuführen.

Der an der Spitze des Presswerkzeuges angeordnete kleinere Radius R2 dringt leichter in die Pulvermasse ein, und trägt so zu einer gleichmäßigeren Verteilung im Nutgrund bei.

So wird eine hohe Stabilität der Schneide erreicht und eine hohe Schneidhaltigkeit gewährleistet, wobei mittels der erfindungsgemäßen Rillenprofilierung zugleich auch die durch den Schneid- bzw. Zerspanungsprozess bedingten Schwingungen deutlich reduziert werden.

Hervorzuheben ist in diesem Zusammenhang, dass sich für Schneidplatten welche zur Herstellung von Stahlwolle eingesetzt werden ein Flankenneigungswinkel des Rillenprofils β von 60° besonders gut bewährt hat, da mit dieser Flankenneigung überraschender Weise die gleichmäßigste Stahlwollequalität erzielt werden konnte.

Ein weiteres Merkmal der Erfindung ist, dass die Beabstandung der Rillen des Rillenprofils, d.h. die Teilung T über die Breite der Werkzeugschneide 5, aber auch die Teilung T über die Schneide 6 innerhalb einer Schneidenplatte 1 ungleichmäßig sein kann.

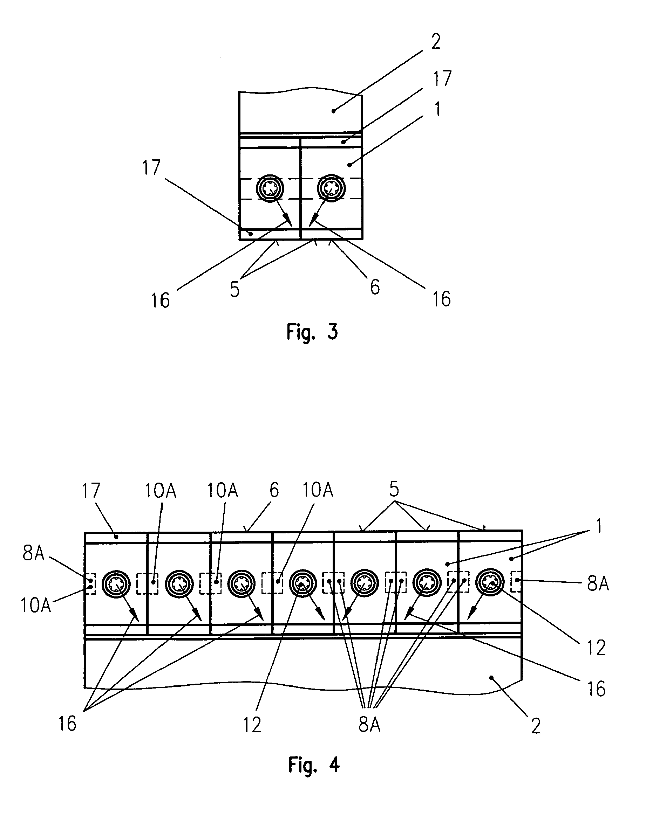

In der Figur 3 wurden erfindungsgemäße (mit einem an den Schneiden 6 der Werkzeugschneide 5 angeordnete Rillenprofil 17) Schneidplatten 1 an einem Handschaber angeordnet.

Derartige Ausführungsformen findet vorwiegend Anwendung in der Bauindustrie, aber auch im Heimwerkerbereich als Schaber für Farbreste oder andere Verunreinigungen.

Schaber mit den erfindungsgemäßen Schneidplatten 1 ermöglichen eine leichte Bauweise und können sowohl mit einem Handgriff versehen, oder mittels eines Adapters auf einem Schwinggerät angeordnet, bzw. mit einem Hochdruckreiniger kombiniert werden.

Die Figur 4 zeigt die Draufsicht auf einen mit Schneidplatten 1 bestückten Werkzeuggrundkörper 2, im vorliegenden Fall einer mit sieben Wendeplatten unsymmetrisch bestückte Schneidleiste einer Recyclinganlage.

Die hierbei eingesetzten Schneidplatten 1 bestehen aus einem hochlegierten pulvermetallurgisch hergestellten Stahl.

Die Standzeiten dieser feststehenden Schneidleisten werden zur Zeit durch den Einsatz von Sicherheitsschaltungen, wie beispielsweise einem schnellen Zurückgefahren der feststehenden Leiste (z.B. dann wenn sich ein größeres Stück Stahl in einem gepressten Kunststoffballen befindet) erhöht.

Mittels der Bestückung mit den erfindungsgemäßen Schneidplatten 1 können jedoch die Standzeiten dieser feststehenden Schneidleisten nochmals deutlich gesteigert werden. Wobei neben der Erhöhung der Schneidhaltigkeit (Standzeit) auch durch den Einsatz von "sparaten nebeneinader angeordneten" Schneidplatten nun bei Beschädigungen (Gewaltbrüchen) nicht mehr die gesamte Schneidleiste kostenintensiv ersetzt werden muss.

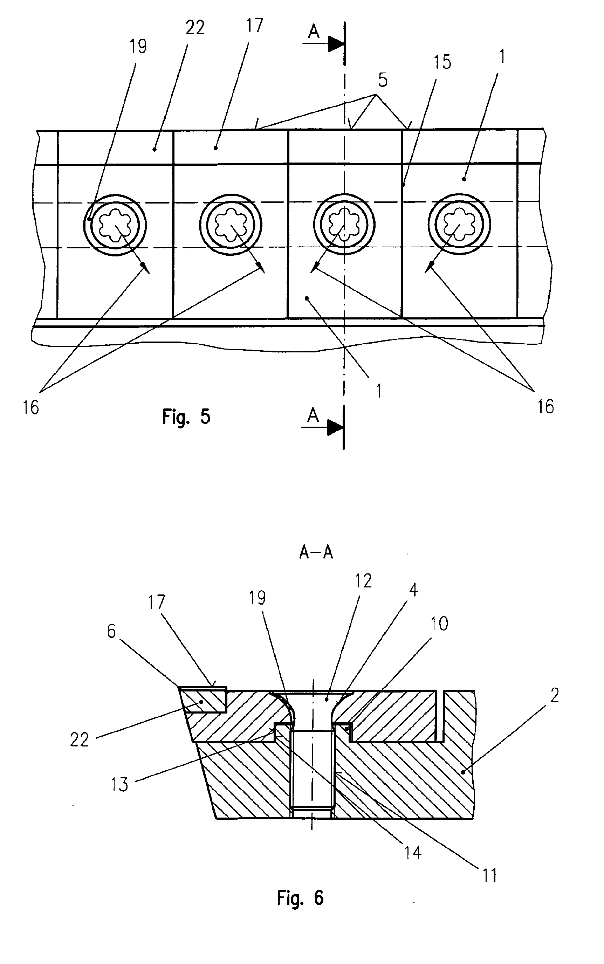

Die Figur 5 zeigt die Draufsicht auf die Werkzeugschneide 5 einer Schneidleiste für Biomassen mit auf den Schneidplatten 1 angeordneten einseitig eingelöteten, mit dem erfindungsgemäßen Rillenprofil 17 versehenen Hartstoffleisten 22.

Durch den Einsatz solcher Schneidplatten 1 auf denen Hartstoffleisten 22 mit dem erfindungsgemäßen Rillenprofil 17 eingelötet sind können die Werkzeugkosten zur Herstellung der Schneidplatten 1 deutlich gesenkt werden

Bei Beschädigungen der Schneidengeometrie können auch bei dieser Ausführungsform die Schneidplatten 1 mit den erfindungsgemäßen Hartstoffleisten 22 einzeln ausgewechselt werden.

Die Figur 6 zeigt nun den Teilschnitt bei A-A durch die in der Figur 5 dargestellte Schneidleiste für Biomassen mit einer einseitig in den Schneidplatten 1 eingelöteten erfindungsgemäßen Hartstoffleiste 22, d.h. mit einem in dieser Hartstoffleiste 22 im Bereich der Schneide 6 angeordnetem Rillenprofil 17.

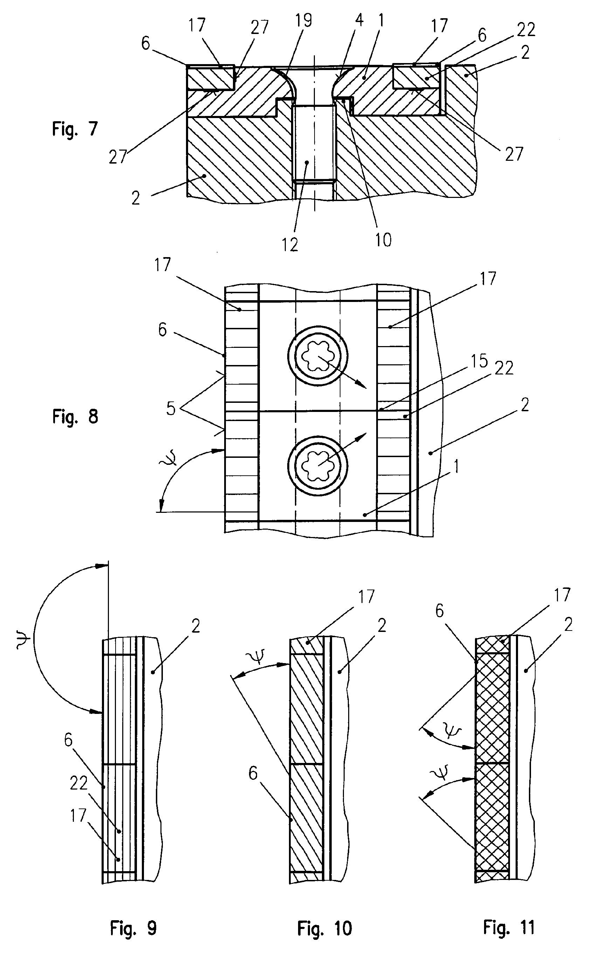

In der Figur 7 ist nun ein Teilschnitt durch eine als Wendeplatte einsetzbare Schneidplatte 1 mit beidseitig eingeklebten erfindungsgemäßen, d.h. im Bereich der Schneide 6 mit dem Rillenprofil 17 versehenen Hartstoffleisten 22 dargestellt.

Zur Verklebung sind entsprechend den jeweils zu erwartenden Schneidenbeanspruchungen entweder nur an der Auflagefläche, oder aber sowohl an der Auflagefläche wie auch an der Anlagefläche der Hartstoffleiste 22 in der Schneidplatte 1 Klebernuten 27 eingebracht in denen der jeweils Anwendung findende Klebstoff angeordnet ist.

Da gegenüber einer Lötverbindung wie aber auch gegenüber einer vollflächigen Klebeverbindung eine derartige mit Klebernuten 27 versehene stoffschlüssige Verbindung den direkten Kontakt, und damit die direkte Kraftübertragung von der Hartstoffleiste 22 in die Schneidplatte 1 gewährleistet, werden durch diese Lösung elastische Verformungen des Lotes bzw. des Klebers vermieden und zwangsläufig daraus resultierenden Beschädigungen der Hartstoffleiste 22 ausgeschlossen.

Die Figur 8 zeigt die Draufsicht auf den Ausschnitt einer Werkzeugschneide 5 aus erfindungsgemäßen Schneidplatten 1 mit beidseitig angeordneten Hartstoffleisten 22 und einem senkrecht zur Schneide 6 in den Hartstoffleisten 22 angeordnetem Rillenprofil 17.

Dieses senkrecht zur Schneide 6 angeordnete Rillenprofil mit einem Rillenneigungswinkel ψ von 90° bewirkt selbst bei langspanenden Werkstoffen wie z.B. bei Cu, Mg, Al und deren Legierungen ein gesicherter Spanbruch.

In der Figur 9 ist eine weitere mögliche Ausführungsform der auf Schneidplatten 1 anzuordnenden Hartstoffleisten 22 mit parallel zur Schneide 6 angeordnetem Rillenprofil 17 dargestellt. Dieses parallel zur Schneide 6 angeordnete Rillenprofil 17 mit einem Rillenneigungswinkel ψ von 180° ist auch gut zur Zerkleinerung von Kartonagen unterschiedlicher Dicke geeignet.

Die Figur 10 zeigt nun eine weitere mögliche Ausführungsform der erfindungsgemäßen Lösung mit einem schräg zur Schneide 6 angeordnetem Rillenprofil 17, hier speziell mit einem Rillenneigungswinkel ψ von 30°.

Ein solches Rillenprofil 17 mit einem Rillenneigungswinkel ψ von 30° gegenüber der Schneide 6 ist sehr gut zur Stahlwolleherstellung geeignet, wobei im Rahmen der Stahlwolleherstellung selbst eine wesentlich geringere Rillenneigung schon eine Ablenkung vom Messerbalken zur Aufwickeleinrichtung gewährleistet, so dass Störungen und Stillstandszeiten vermieden werden können.

Die Figur 11 zeigt eine weitere mögliche Ausführungsform der erfindungsgemäßen Lösung mit einem kreuzweise zur Schneide 6 angeordnetem Rillenprofil 17, hier mit einem Rillenneigungswinkel ψ von jeweils 45° gegenüber der Schneide 6.

Ein derartiges wie in der Figur 11 1 dargestelltes erfindungsgemäßes Rillenprofil 17 ist zur Zerkleinerung von unterschiedlichen Hölzern, selbst zur Zerkleinerung von langfasrigen Hölzern, wie aber auch zur Zerkleinerung von Spanplatten oder ähnlichen Werkstoffen sehr gut geeignet, da mittels einer derartigen Profilierung bei diesen Werkstoffen kleine Späne erzeugt werden wodurch einer "Verstopfung" der Anlage entgegengewirkt wird.

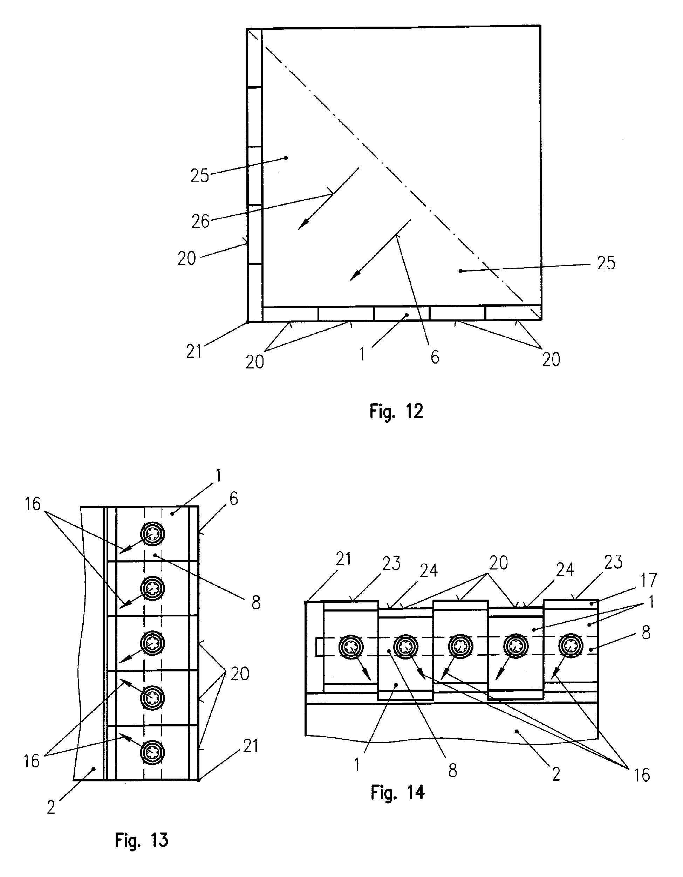

Die Figur 12 zeigt die Vorderansicht eines "Schneidzahnes". Derartige Schneidzähne sind auf Rotoren von Recycling- und Aufbereitungsmaschinen angeordnet die sich sind auch mit Drehzahlen von 200 U/min bis 4000 U/min drehen. Unter Beachtung der beim Zerkleinerungsprozess entstehenden Wärme werden die Lagerspiele größer gewählt, woraus zwangsläufig erhöhte Schwingungen mit einer erhöhten Beanspruchung und einem sich daraus ergebenden erhöhten Verschleiß der Schneidzähne resultieren.

Erfindungsgemäß werden bei diesem Einsatzfall die Schneidplatten "hochkant" angeordnet. Diese spezielle erfindungsgemäße Anordnung mit stirnseitiger, fast frontaler Beanspruchung ermöglicht eine wesentlich höhere Belastbarkeit wie auch eine aus dieser Anordnung resultierende wesentlich höhere Stabilität mit einer damit in Verbindung stehenden geringeren Bruchgefahr und bietet somit an den Flanken der Stirnseite der Schneidzähne einen sehr hohen Verschleißschutz.

Die Zahnflanken 20 werden dabei von jeweils fünf Schneidplatten 1 gebildeten. Die zwischen diesen Zahnflanken 20 liegenden Zahnfläche 25 ist mit Wolframcarbid-Pulver in Richtung der Zahnspitze 21 aufgepanzert, so dass während des Einsatzes, d.h. beim Recycling die Form der Aufpanzerung zu einer zusätzlichen "reißenden" Wirkung führt, und dabei gleichzeitig den Verschleiß der Zahnfläche 25 zwischen den Zahnflanken 20 minimiert.

Infolge des Einsatzes der erfindungsgemäßen, "reißenden" (mit einem Rillenprofil 17 versehenen) Schneidplatten in der hier beschriebenen Anordnung werden sowohl die Kosten des Werkzeugmaterials wie auch die Fertigungskosten zur Herstellung der Schneidzähne deutlich reduziert.

Gleichzeitig wird die Standzeit der Zahnschneiden wesentlich erhöht und zudem eine optimale und gleichzeitig kostengünstige Instandhaltung der Zahnschneiden gewährleistet.

Vorteilhaft ist es, wenn wie in der Figur 13 dargestellt, die Anzahl der Schneidplatten 1 der in Reihe als Zahnflanken 20 miteinander und als Zahnflanke 20 zueinander unter einem Winkel verspannten Schneidplatten 1 entlang einer Zahnflanke 20 ungeradzahlig ist.

Dadurch wird gewährleistet, dass untereinander eine gleichmäßige Verspannung der erfindungsgemäßen Schneidplattenreihen ("in Summe") erfolgt.

Die Figur 14 zeigt nun die Draufsicht auf eine ebenfalls erfindungsgemäß mögliche Ausführungsform der Zahnflanke des Schneidzahnes aus Figur 12, und zwar mit entlang jeder Zahnflanke 20 in der Tiefe versetzt angeordneten Schneidplatten 1.

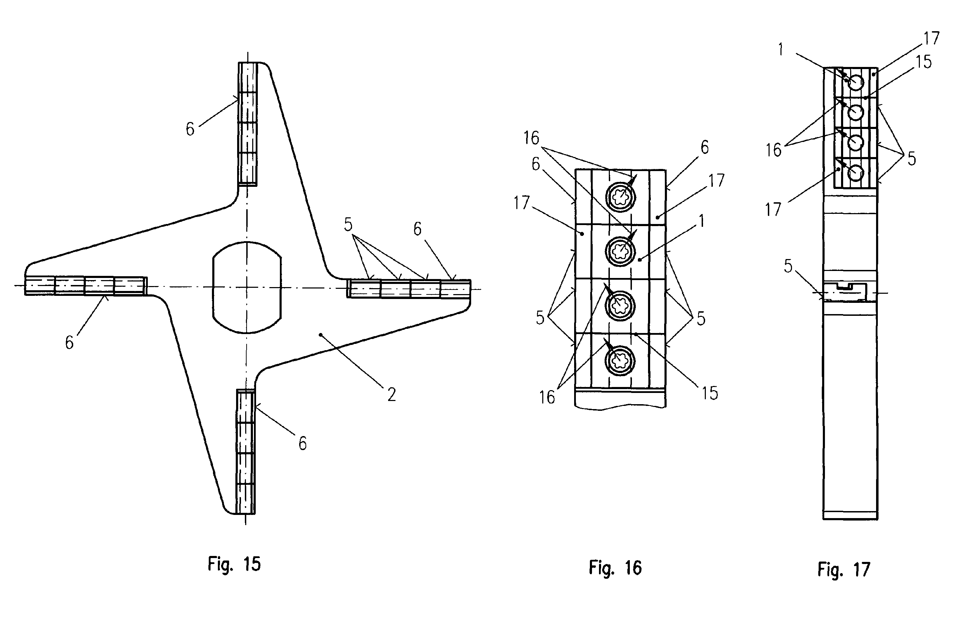

In der Figur 15 ist die Seitenansicht eines vierarmigen, mit den erfindungsgemäßen Schneidplatten in Reihen besetzten, beidseitig schneidenden Schermessers für Biomassen dargestellt welches zwischen zwei Lochscheiben arbeitet, so dass die einander gegenüberliegenden Schneiden stets gleichzeitig in Einsatz sind.

Die Figur 16 zeigt in der Draufsicht eine der beidseitig schneidenden, mit dem erfindungsgemäßen Rillenprofil 17 ausgestatteten Schneidplattenreihen.

In der Figur 17 ist nun die Draufsicht auf die Schneidplattenreihe eines ähnlich der Figur 15 ausgebildeten Schermessers für Biomassen, jedoch mit seitlich abwechselnd angeordneten, mit dem erfindungsgemäßen Rillenprofil 17 versehenen, die Werkzeugschneide 5 bildenden Schneidplatten 1 dargestellt. Bei dieser Ausführungsform welche ebenfalls zwischen zwei Lochscheiben arbeitet, kommt abwechselnd jeweils eine mit dem erfindungsgemäßen Rillenprofil 17 versehene Werkzeugschneide 5 zum Einsatz.

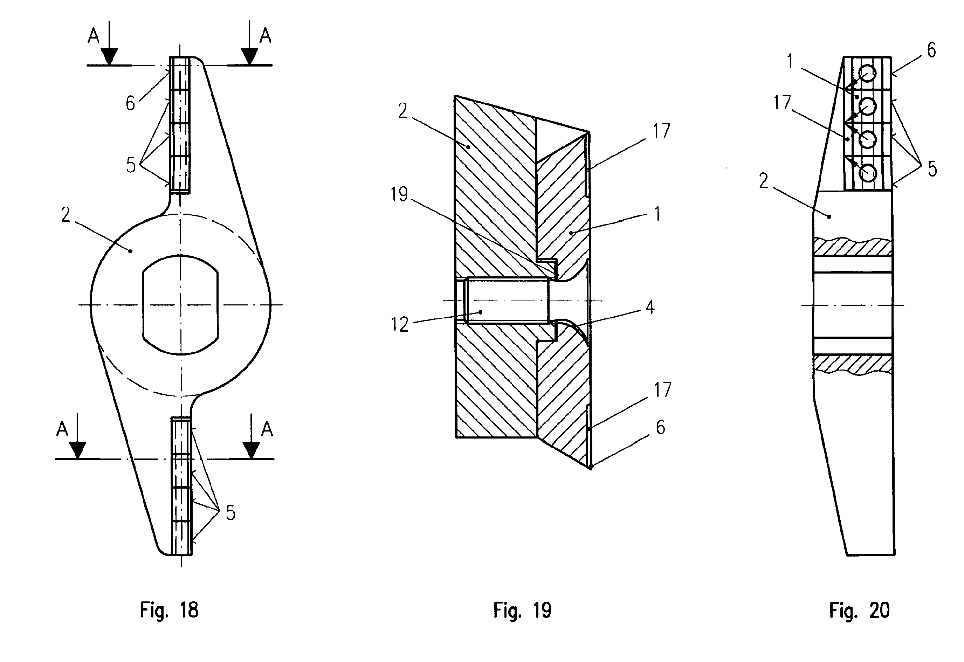

Die Figur 18 zeigt nun die Seitenansicht eines zweiarmigen, mit den erfindungsgemäßen Schneidplatten 1 in Reihe besetzten, einseitig schneidenden Schermessers für Biomassen welches jedoch an nur einer Lochscheibe arbeitet.

In der Figur 19 ist nun der Schnitt bei A-A durch eine der Schneiden des zweiarmigen, mit erfindungsgemäßen, d.h. mit dem erfindungsgemäßen Rillenprofil 17 versehenen Schneidplatten 1 besetzten, einseitig schneidenden Schermessers für Biomassen gemäß Figur 18 dargestellt.

Die Figur 20 zeigt die Draufsicht auf die mit dem erfindungsgemäßen Rillenprofil 17 in Reihe angeordneten Schneidplatten 1 des zweiarmigen, einseitig schneidenden Schermessers für Biomassen gemäß Figur 18.

### Bezugszeichenzusammenstellung

- T: Teilung
- R1: Außenradius
- R2: Innenradius
- α: Kraftangriffswinkel
- β: Flankenneigung
- ψ: Rillenneigungswinkel

- 1: Schneidplatte
- 2: Werkzeuggrundkörper
- 3: Oberfläche
- 4: Ausweitung
- 5: Werkzeugschneide
- 6: Schneide
- 7: Bodenfläche
- 8: Nut
- 8A: Nutsegmente
- 9: Auflagefläche
- 10: Führungsschiene
- 10A: Führungsschienenabschnitt
- 11: Gewindebohrung
- 12: Senkkopfschraube
- 13: Wandung
- 14: Stegwandung
- 15: Seitenwange
- 16: Kraftangriffsrichtung
- 17: Rillenprofil
- 18: Beschichtung
- 19: Befestigungsbohrung
- 20: Zahnflanke
- 21: Zahnspitze
- 22: Hartstoffleiste
- 23: Vorschneide
- 24: Spaltschneide
- 25: Zahnfläche
- 26: Materialflußrichtung
- 27: Klebernut

## Patentansprüche

1. Schneidplatte (1) aus legiertem Stahl, aus Hartmetall, oder aus hochlegiertem pulvermetallurgisch hergestellten Stahl, o.ä. mit einer oder mehreren Schneide/n (6), wobei diese Schneiden (6) entweder direkt an der Schneidplatte (1) oder an im Bereich der Schneide/n (6) an der Schneidplatte (1) befestigten Hartstoffleiste/n (22) angeordnet sind, **dadurch gekennzeichnet, dass** im Bereich der Schneide/n (6), d.h. entweder auf der Oberfläche (3) der Schneidplatten (1) selbst oder an der Schneide (6) der Hartstoffleiste/n (22), Rillenprofile (17) angeordnet sind.

2. Schneidplatte (1) aus Hartmetall oder aus hochlegiertem pulvermetallurgisch hergestellten Stahl, o.ä. nach Anspruch 1, **dadurch gekennzeichnet, dass** der Außenradius (R1) des auf der Oberfläche (3) der Schneidplatte (1), bzw. des im Bereich der Schneiden (6) an der/den Hartstoffleiste/n (22) angeordneten/eingearbeiteten Rillenprofils (17) größer als der Innenradius (R2) ist.

3. Schneidplatte (1) nach Anspruch 1, **dadurch gekennzeichnet, dass** die Schneidplatte (1) als Wendeplatte mit "gegenüberliegenden" Schneiden (6) ausgebildet ist.

4. Schneidplatte (1) nach Anspruch 1, **dadurch gekennzeichnet, dass** die auf der Schneidplatte (1) im Bereich der Schneide/n (6) angeordnete/n Hartstoffleiste/n (22) eingelötet oder eingeklebt ist/ sind.

5. Schneidplatte (1) nach Anspruch 1, **dadurch gekennzeichnet, dass** das Rillenprofil (17) zur Schneide (6) unter einem Rillenneigungswinkel (ψ) von 0° bis 180° angeordnet ist.

6. Schneidplatte (1) nach Anspruch 1**, dadurch gekennzeichnet, dass** das Rillenprofil (17) kreuzweise zur Schneide (6) angeordnet ist.

7. Schneidplatte (1) nach Anspruch 1, **dadurch gekennzeichnet, dass** die Beabstandung der Rillen des Rillenprofils, die Teilung (T) innerhalb einer Schneidenplatte (1) ungleichmäßig ist.

8. Schneidplatte (1) nach Anspruch 1, **dadurch gekennzeichnet, dass** die Beabstandung der Rillen des Rillenprofils, die Teilung (T) über die Breite der Werkzeugschneide (5) ungleichmäßig ist.

9. Anordnung zur Befestigung von Schneidplatten (1) nach Anspruch 1, **dadurch gekennzeichnet, dass** die Schneidplatte (1) an der/den Schneide/n ( 6) mit einer Hartstoffbeschichtung versehen ist.

10. Anordnung und Befestigung von Schneidplatten (1) nach Anspruch 1, **dadurch gekennzeichnet, dass** der Werkzeuggrundkörper (1) mindestens an der Auflagefläche (9) der Schneidplatte (1) eine wärmeleitende Beschichtung (18) trägt.
